# EUROPEAN PATENT APPLICATION

(11) **EP 1 906 344 A1**
(43) Date of publication of application: **02.04.2008**
(21) Application number: 06020450.0
(22) Date of filing: 28.09.2006
(51) Int. Cl.: G06Q 10/00, G06F 9/46

(54) **A method and system for providing process statistic data for a business process work flow**

(71) Applicant: SIEMENS AKTIENGESELLSCHAFT, 80333 München (DE)
(72) Inventor: Augustin, Stefan, 81379 München (DE); Last, Holger, 80801 München (DE); Skubacz, Michal, 82194 Gröbenzell (DE)

(57) **Abstract**

The invention provides a method for providing process statistic data for a business process work flow, wherein a statistic web service is provided which receives a statistic report request inserted into the business process work flow from a business process work flow instance executed by the work flow engine and evaluates parameters of the statistic report request which indicates a current state of the business process work flow instance to generate the process statistic data.

## Description

### BACKGROUND OF THE INVENTION

The invention relates to a method and a system for providing process statistic data for a business process work flow, in particular for process monitoring and analysis.

Web services are designed to automate e-business on a data-network such as the internet. A web service is a service available via the internet for conducting transactions. Distributed computer systems enhance information sharing, mobile communication and e-business. For instance, distributed computer systems can be used to perform financial transactions, automate purchase orders or to automate multimedia content delivery. Web services provide a platform for system-independent machine-to-machine communications. In a service-orientated architecture (SOA) web services are available in a network such as the world wide web. A service orientated architecture (SOA) provides the possibility to share functions, typically business functions, in a wide-spread and flexible way.

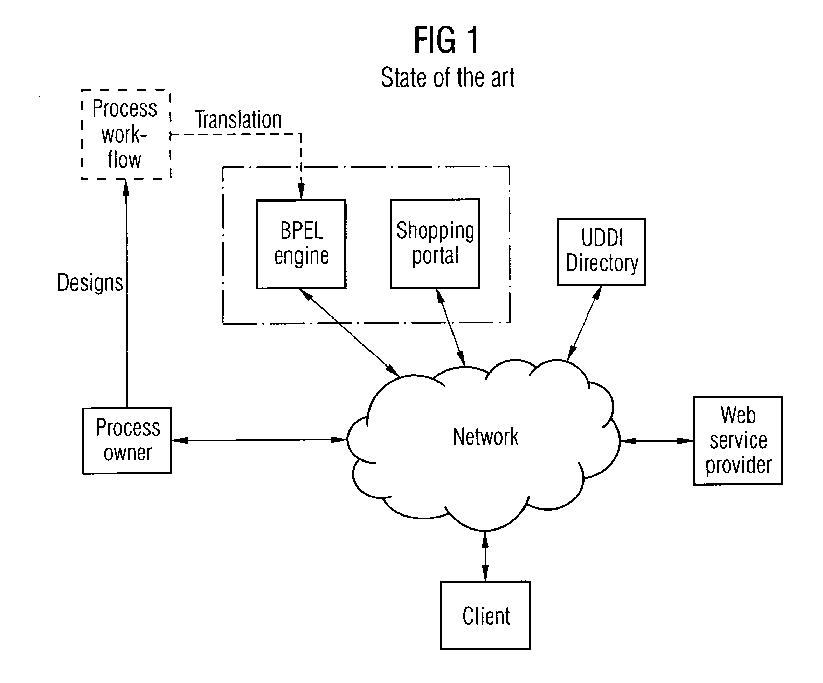

Fig. 1 illustrates the provision of process statistic data for a business process work flow according to the state of the art.

In the given example, a shopping portal is provided for users or clients to buy goods via the network. A process owner designs a process workflow which is translated and implemented in a business process execution language (BPEL-engine). To purchase goods, the client will perform a login at the shopping portal and then send an order request via the network to the shopping portal. The shopping portal will start the business process work flow implemented in the BPEL-engine. The BPEL-engine will then perform a lookup in an UDDI directory or contact directly a web service provider offering the desired goods. The web service provider offers his service including details to allow access to any user who intends to use the service or to buy goods. For this purpose, the service provider publishes detailed information about functionalities of his service and how the service can be accessed in order to make it available to a potential service user. This information is, for instance, represented in form of meta-data published in a directory or a registry. The universal description directory (UDDI) will provide the BPEL-engine with an address such as a URL so that the BPEL-engine can invoke the desired web service via the network. The web service provider transmits a response and additional data such as a delivery date of the goods to the BPEL-engine which will forward the relevant data such as the delivery data to the shopping portal. The shopping portal will then forward the necessary information such as the delivery data to the client who can accept or reject the offer.

Process owners require actual, correct and interpretable information on all vital aspects of their business process in order to ensure successful operation of a company by detecting current problems to improve their process work flows, systems or other resources.

The process owner will be, for example, a developing department or a telecommunication company which designs a process work flow for its customers.

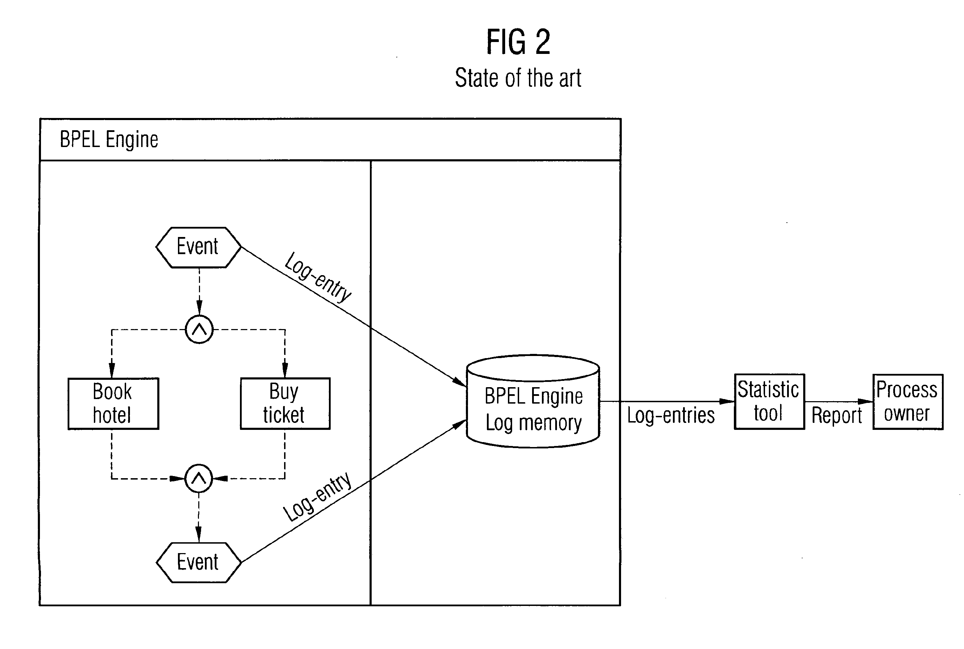

Fig. 2 shows a conventional way of providing process statistic data for a business process work flow according to the state of the art.

A conventional BPEL-engine such as Oracle's BPEL-engine, Microsoft BIZTALK or the SAP-Net weaver provides log-entries for a statistic software tool. In the given example of fig. 2 the business work flow is designed to organize a business trip that includes different tasks such as booking of a hotel or to buy a ticket. At certain points within the work flow, events trigger the generation of a log-entry. Generated log-entries are stored temporarily in the memory of the BPEL-engine. A log-entry might be for instance: "process instance X of business process Y has invoked at time t1 a web service Z and received at time t2 a response from web service Z." On the basis of such log-entries, it is possible to calculate statistics such as an average response time of web service Z. The statistics software tool generates the statistic data on the basis of the stored log-entries and generates on demand or periodically reports which are forwarded to the process owner. Such a report might include statistic data such as a number of orders for special goods per month or an average business process period to deliver the goods to the client after the initial order request.

As can be seen from the fig. 2, the BPEL-engine generates the log-entries and the statistic software tool reads out log entries from the BPEL engine to evaluate them. Then, the statistic tool generates the statistic data and forwards them in a report to the process owner.

The conventional way to provide process statistic data as shown in fig. 2 has several disadvantages. The statistic tool has to be integrated or adapted to a corresponding BPEL-engine. Accordingly, each BPEL-engine in the market needs its own fitting statistics tool software. Accordingly, statistic data coming from multiple sources are not consolidated.

A further disadvantage is that the process owner has no influence which information is written as log-entries. In the conventional way, many log-entries are generated wherein most of the log-entries form redundant information not used by the process owner. The filtering of relevant statistic is difficult because of the huge amount of log-entries generated by the BPEL-engine. A consequence of this is that the implementation of statistic reports is very complicated and is normally outsourced by the process owner to an IT-expert familiar with the respective statistic tool. Naturally, this is very time-consuming and expensive for the process owner.

### BRIEF SUMMARY OF THE INVENTION

It is an object of the present invention to provide a method and a system for providing accurate and user-controlled collection of statistic data.

The invention provides a method for providing process statistic data for a business process work flow, wherein a statistic web service is provided which receives a statistic report request inserted into the business process work flow from a business process work flow instance executed by the work flow engine and evaluates parameters of the statistic report request which indicate a current state of the business process work flow instance to generate the process statistic data.

An aspect of the method according to the present invention is that it is possible for the process owner to define which data are to be stored as log-entries for statistic purposes.

Another aspect of the method according to the present invention is that it allows that the statistic tool is independent from the used BPEL-engine.

In one embodiment of the method according to the present invention the parameters of that statistic report request are stored in a memory.

In a further embodiment of the method according to the present invention the stored parameters are read out by a statistic tool to generate a statistic report for the process owner of the business process work flow.

In a further embodiment of the method according to the present invention an alarm for the process owner is generated depending on the parameters that are received with the statistic report request from the business process work flow instance and depending on parameters of that business process work flow stored in said memory.

In one embodiment of the method according to the present invention the process statistic data is generated from parameters according to a configured statistic function.

In a further embodiment of the method according to the present invention the statistic report request comprises a group of parameters forming a log-entry stored in said memory.

In one embodiment of the method according to the present invention the parameters comprise
a process ID of the business process work flow,
a process instance ID of said business process work flow instance,
a time stamp,
a requesting component ID of the requesting work flow engine, an ID of a resource,
an ID of an event within said process triggering said statistic report request,
a process responsible and performance measurement parameters.

In one embodiment of the method according to the present invention the work flow engine is formed by a BPEL (business process execution language)-engine.

In one embodiment of the method according to the present invention the statistic report request is transmitted from the business process work flow engine via a data network to a statistic web service provider which generates the statistic data.

In one embodiment of the method according to the present invention a signal triggering process change is sent to the work flow engine depending on parameters received with the statistic request from the business process work flow instance and depending on parameters of said business work flow stored in the memory.

The invention further provides a server for providing a statistic web service for a business process work flow,
wherein the server receives from a business process work flow instance a statistic report request comprising parameters which indicate a current state of the business process work flow instance to generate the process statistic data according to a statistic function on the basis of the received parameters.

The invention further provides a work flow engine for executing a business process work flow having an inserted statistic report request which invokes a statistic web service of a statistic web service provider.

The invention further provides a system for providing process statistic data comprising at least one work flow engine for executing a business process work flow having an inserted statistic report request which invokes a statistic web service of a web service provider via a data network, wherein the statistic report request comprises parameters which indicate the current state of the executed business process work flow instance.

### BRIEF DESCRIPTION OF THE DRAWINGS

The invention will be described in greater detail hereinafter, by way of non-limiting examples, with reference to the embodiments shown in the drawings.
Fig. 1 shows a service-orientated architecture according to the state of the art;
Fig. 2 shows a conventional way to generate process statistic data for a business process work flow according to the state of the art;
Fig. 3 shows a diagram illustrating an embodiment for providing process statistic data for a business process work flow according to the present invention;
Fig. 4 shows a further diagram for illustrating an embodiment of the method for providing process statistic data for a business process work flow according to the present invention.

### DETAILED DESCRIPTION OF THE FIGURES

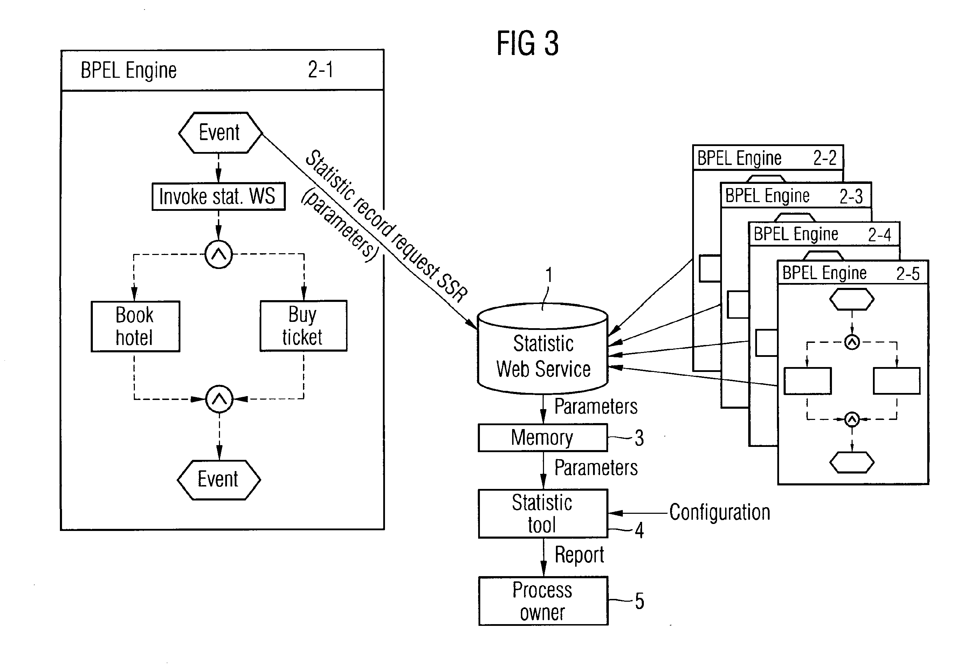

As can be seen from fig. 3, a statistic web service according to the present invention is implemented on a server 1, which might be connected to several BPEL-engines 2 directly or via a data network (not shown). On each BPEL-engine 2 a corresponding business process work flow is executed. For example, on BPEL-engine 2-1 a business process work flow is executed for organizing a business trip performing tasks such as booking a hotel or buying flight tickets. As can be seen from fig. 3, the business process work flow executed on BPEL-engine 2-1 includes a command for invoking a statistic web service according to the present invention on server 1. The statistic web service receives a statistic report request SSR inserted into the business process work flow from the business process instance executed by the work flow engine 2-1. The statistic web service then evaluates the parameters of that statistic report request SSR which indicate a current state of the business process work flow instance and generates process statistic data.

The parameters of the statistic report request SSR are stored in a memory 3. Then, these stored parameters are read out by a statistic tool 4 to generate a statistic report for a process owner 5 of the business process work flow.

In one embodiment of the method according to the present invention an alarm for the process owner 5 is generated depending on the parameters received with the statistic report request SSR from the business process work flow instance and depending on parameters of said business process work flow stored in the memory 3. In one embodiment, the process statistic data is generated from parameters according to a configured statistic function such as an average response time of a web service. In one embodiment of the method according to the present invention the statistic report request SSR comprises a group of parameters forming a log-entry stored in the memory.

The statistic report request SSR is transmitted from the BPEL-engine 2-1 to the server 1 on which the statistic web service according to the present invention is executed. The statistic report request SSR comprises several parameters defined by the process owner 5. Typical process parameters are a process ID of the business process work flow, a process instance ID of the business process work flow instance, a time stamp, a requesting component ID of the requesting work flow engine 2, an ID of a resource such as a web service provider, an ID of an event within the business process triggering the statistic report request SSR, a process responsible and performance measurement parameters which are dependent on the underlying business process model.

A signal triggering process change is sent to the work flow engine depending on the parameters received with the statistic report request SSR from the business process work flow instance depending on parameters of the business process work flow stored in the memory.

In one embodiment of the method according to the present invention is performed by a BPEL-engine 2 as shown in figure 3. The method for providing process statistic data for a business process work flow can be implemented also with other work flow engines.

The server 1 receives from the business process work flow instance, i.e. the actual executed business process work flow, a statistic report request SSR comprising pre-configured parameters which indicate a current state of the business work flow instance.

The server 1 then generates the process statistic data according to the statistic function on the basis of the received parameters.

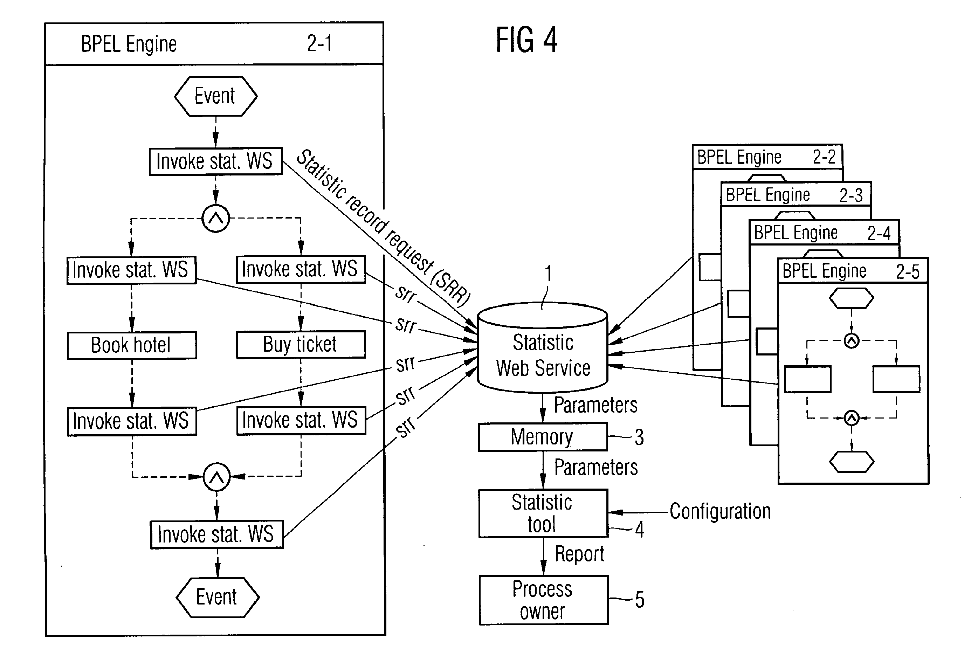

Fig. 4 shows a further example for a business process work flow that comprises several statistic record requests SSR inserted into the business process work flow. As can be seen from fig. 4, the process owner 5 is quite free to place a statistic report request SSR at any point within the business process work flow where he wishes to get statistic data. In the given examples six invocations of the statistic web service running on the server 1 are inserted into the business process work flow so that the process owner can define exactly which kind of information he needs for his statistics. The request includes information tailored for each tracked business task. Optionally, the event parameters to be sent to the statistic web service can be accompanied by additional meta-information like for example acceptable threshold-values. In this case, the statistic web service can check the values and for example raise an alert when necessary. The meta-information necessary to interpret the values is included by the business process designer during process work flow modeling and the statistic web service contains generic rules.

The method and system according to the present invention allows the use of a platform independent statistics web service which can be used together with any execution environment. A statistic invocation at each tracking point can be configured under control of the process designer who is also the consumer for monitoring and analyzing of the generated statistics reports. The process designer modeling the business process work flow can influence what and when process tracking information is collected without any further IT department support. This gives the process designer or the process owner the flexibility to tailor process tracking data with specific needs of the process and to change the settings at any time. Monitoring and analyzing functionality is separated from the execution environment and thus remains constant in case of software migration or updates. The method according to the present invention can be used in cases where several separated execution environments also from different vendors are in place. A single statistic web service according to the present invention can be used currently by a number of heterogeneous execution or composition environments. This way, a complex picture and a complex process can be presented and complex data integration tasks can be avoided. The method according to the present invention has the further advantage that it is invariant to changes of the process work flow because a semantic tracking is provided instead of automatic generation of log-entries. A further advantage of the method according to the present invention is that meta-information necessary for the interpretation of the statistics can be included into the process modeling and are not included in a separate system. In this way, tasks like raising alerts in case of threshold violation can be implemented in a generic way within the statistic web service and the control remains truly by the process designer. Therefore no separate rules are necessary for monitoring or alerting when certain thresholds are surpassed.

## Claims

1. A method for providing process statistic data for a business process work flow,
wherein a statistic web service is provided which receives a statistic record request inserted into the business process work flow from a business process work flow instance executed by the work flow engine and evaluates parameters of said statistic record request which indicates a current state of the business process work flow instance to generate the process statistic data.

2. The method according to claim 1,
wherein the parameters of said statistic record request are stored in a memory.

3. The method according to claim 2,
wherein the stored parameters are read out by a statistic tool to generate a statistic report for a process owner of said business process work flow.

4. The method according to claim 2,
wherein an alarm for the process owner is generated depending on the parameters received with the statistic record request from the business process work flow instance and depending on parameters of said business process work flow stored in said memory.

5. The method according to claim 1,
wherein the process statistic data is generated from parameters according to a configured statistic function.

6. The method according to claim 1,
wherein the statistic record request comprises a group of parameters forming a log entry stored in said memory.

7. The method according to claim 6,
wherein the parameters are configurable and comprise among others
a process ID of said business process work flow,
a process instance ID of said business process work flow instance,
a time stamp,
a requesting component ID of the requesting work flow engine, an ID of a resource,
an ID of an event within said business process triggering said statistic record request,
a process responsible, and
performance measurement parameters which are dependent on the underlying business process model.

8. The method according to claim 1,
wherein the work flow engine is formed by a BPEL (Business Process Execution Language) engine.

9. The method according to claim 1,
wherein the statistic record request is transmitted from the business process work flow engine via a data network to a statistic web service provider which generates the statistic data.

10. The method according to claim 2,
wherein a signal triggering process change is sent to the work flow engine depending on the parameters received with the statistic record request from the business process work flow instance and depending on parameters of said business process work flow stored in said memory.

11. A server for providing a statistic web service for a business process work flow,
wherein the server receives from a business process work flow instance a statistic record request comprising parameters which indicate a current state of the business process work flow instance to generate the process statistic data according to a statistic function on the basis of the received parameters.

12. The server according to claim 11,
wherein the server comprises a memory for storing the received parameters.

13. A work flow engine for executing a business process work flow having an inserted statistic record request which invokes a statistic web service of a statistic web service provider.

14. The work flow engine according to claim 13,
wherein the work flow engine is a BPEL (Business Process Execution Language) engine.

15. The work flow engine according to claim 13,
wherein the statistic record request comprises parameters which indicate a current state of the business process work flow instance.

16. The work flow engine according to claim 15,
wherein the parameters are configurable and comprise among others
a process ID of said business process work flow,
a process instance ID of said business process work flow instance,
a time stamp,
a requesting component ID of the requesting work flow engine, an ID of a resource,
an ID of an event within said business process triggering said statistic record request,
a process responsible, and
measurement parameters which are dependent on the underlying business process model.

17. A system for providing process statistic data comprising at least one work flow engine for executing a business process work flow having an inserted statistic record request which invokes a statistic web service of a web service provider via a data network, wherein the statistic record request comprises parameters which indicate a current state of the executed business process work flow instance.
